# EUROPÄISCHE PATENTSCHRIFT

(11) **EP 2 302 278 B1**
(45) Veröffentlichungstag und Bekanntmachung des Hinweises auf die Patenterteilung: **18.02.2015**
(21) Anmeldenummer: 09012280.5
(22) Anmeldetag: 28.09.2009
(51) Int. Cl.: F16L 59/12

(54) **Halter für eine Außenkonstruktion an einem Fallrohr**
Holder for an external construction on a down pipe
Support pour une construction extérieure sur un tuyau de descente

(43) Veröffentlichungstag der Anmeldung: 30.03.2011
(73) Patentinhaber: G + H Isolierung GmbH, 67059 Ludwigshafen (DE)
(72) Erfinder: Gwosdek, Rainer Dr. Ing., DE-44651 Herne (DE); Starke, Jürgen, DE-44388 (DE); Kempf, Ulrich, DE-67063 Ludwigshafen (DE); Hillen, Albert, DE-53424 Remagen (DE)
(74) Vertreter: Grünecker, Kinkeldey, Stockmair & Schwanhäusser

(56) Entgegenhaltungen:
- EP-A- 0 142 762
- EP-A2- 1 388 620
- DE-A1- 4 243 806
- DE-U1- 9 010 503

## Beschreibung

Die Erfindung betrifft eine Halterung für eine Außenkonstruktion an einem Fallrohr, insbesondere für eine Verblechung und/oder eine Isolationsschicht an einem Fallrohr für eine Dampfkraftanlage, sowie ein Fallrohr zur formschlüssigen Verankerung der erfindungsgemäßen Halterung.

Fallrohre für Dampfleitungen, wie sie im Kraftwerken beispielsweise für die kalte und heiße Zwischenüberhitzung verwendet werden, sind bekanntermaßen mit einer Außenkonstruktion bestehend aus zumindest einer Isolierung und einer Verblechung ummantelt. Zur Befestigung der Ummantelung werden Schellen verwendet, die mittels Schrauben am Fallrohr fixiert werden. Die Schrauben müssen jedoch je nach Rohrabschnitt bzw. Anlagenteil Temperaturen von über 600°C aushalten und sind daher sehr teuer.

Außerdem wird die Außenwandkonstruktion an den Schellen durch vergleichsweise massive Haltearme getragen, wobei diese direkt oder mit Zwischenlagenplatten zur thermischen Trennung bis zur Verblechung führen. Dies verursacht entweder eine ungünstig hohe Wärmeleitung zur Verblechung oder, bei Verwendung der Zwischenlagenplatten, eine Schwächung der Statik.

Die EP 0142762 A beschreibt Profilringe zur Stabilisierung von lsolationsformkörpern an der Innenwand eines Rohres, wobei die Profilringe ein abgewinkeltes Profil aufweisen, das in die Isolationsformkörper eingreift und bis an die Innenwand heranreichen kann.

Die DE 4243806 A1 beschreibt Halterungen für eine Verblechung an der Außenseite eines Rohres, bei der zwischen am Rohr angeschweißten Abstandshaltern und der Verblechung eine Schraubverbindung hergestellt wird. Die Halterungen weisen Konsolen zum Tragen der Außenkonstruktion und Ankerplatten mit Ausnehmungen auf. An der Außenwand des Rohres sind Vorsprünge aufgeschweißt, wobei die Ankerplatten so ausgebildet sind, dass die Eigenlast der Außenkonstruktion durch einen Formschluss zwischen der Ankerplatten und dem Rohr getragen wird.

Die DE 9010503 U1 beschreibt eine abgewinkelte Befestigungskralle für Dämmmaterial an einer Wand. Die Befestigungskralle lässt sich über eine Bohrung an der Wand festschrauben.

Aufgabe der Erfindung ist es, für die Verbindung zwischen Fallrohr und Außenkonstruktion eine wirtschaftlichere und gleichzeitig stabile Lösung bereitzustellen, bei der auch die genannten Probleme der Wärmeleitung berücksichtigt werden.

Dies wird mit einem Fallrohr und Halterungen gemäß Anspruch 1 erzielt. Die erfindungsgemäßen Halterungen umfassen Konsolen zum Tragen der Außenkonstruktion, an denen eine Ankerplatte vorgesehen ist, die durch Einhängen an auf der Außenwand des Fallrohrs aufgeschweißten Vorsprüngen verankert werden kann. Dies ermöglicht eine einfache Montage und verringert die Belastung zusätzlicher Halteelemente wie Schrauben und/oder Nieten im stark erwärmten, rohrnahen Bereich der Halterung.

Außerdem ist in der Ankerplatte eine Ausnehmung zum Einhängen und Verankern der Konsole am Fallrohr ausgebildet. Dies ermöglicht eine kostengünstige Realisierung der Verankerung.

Ferner ist die Ankerplatte so ausgebildet, dass die Eigenlast der Außenkonstruktion im Wesentlichen durch einen Formschluss zwischen der am Fallrohr verankerten Ankerplatte und dem Fallrohr getragen wird. Dies erübrigt zusätzliche Halteelemente wie Schrauben und/oder Nieten im stark erwärmten, rohrnahen Bereich der Halterung.

Vorzugsweise sind die Konsole und die Ankerplatte miteinander verschweißt. Eine solche Verbindung ist besonders stabil, zuverlässig und kostengünstig herzustellen.

Vorzugsweise ist die Ankerplatte in der Draufsicht rechtwinklig zur Konsole ausgerichtet, um die Konsole in einer im Wesentlichen radialen Ausrichtung am Fallrohr zu verankern. Dadurch kann die statische Belastung gleichmäßig auf mehrere Halterungen verteilt werden. Dies ermöglicht eine geringere Wandstärke der Konsole und geringere Wärmeableitung zur Außenkonstruktion.

Vorzugsweise ist die Konsole eine plattenförmige Kragkonsole aus einem warmfesten Stahl, deren Dicke im Mittel höchstens 10 mm, insbesondere höchstens 5 mm beträgt. Dieses Konstruktionsprinzip ist für eine umfänglich gleichmäßige Anordnung besonders geeignet, da es ausreichende Stabilität bei geringer Wärmeableitung ermöglicht. Die Statik schwächende Zwischenlagenplatten sind dann nicht mehr erforderlich.

Vorzugsweise ist die Konsole eine plattenförmige Kragkonsole, bei der das Verhältnis einer kleinsten Abmessung in einer Richtung parallel zur Längsachse des Fallrohrs zur Dicke der Kragkonsole mindestens 5, vorzugsweise mindestens 10 beträgt. Bei diesen Abmessungen ergibt sich ein besonders günstiges Verhältnis von Stabilität und Wärmeableitung.

Vorzugsweise ist die Konsole eine Kragkonsole und zumindest abschnittsweise als Stabwerk ausgebildet. Eine solche Konstruktion erlaubt eine besonders geringe Wärmeableitung.

Vorzugsweise ist an einer der Ankerplatte entgegen gesetzten Stirnfläche der Konsole ein Aufhängeband mit einer zur Ankerplatte im Wesentlichen parallelen Auflagefläche für die Verblechung vorgesehen. Dadurch lässt sich die Verblechung in einer konzentrischen Anordnung zum Fallrohr besonders einfach mit Schrauben und/oder Nieten befestigen.

Vorzugsweise ist die Querschnittsfläche des Aufhängebands kleiner als die Querschnittsfläche der Konsolenstirnfläche. Dadurch wird die Wärmeableitung zur Verblechung weiter reduziert.

Vorzugsweise ist an dem Aufhängeband zwischen der Konsolenstirnfläche und der Auflagefläche ein abgewinkelter Abschnitt ausgebildet. Dadurch lässt sich der Abstand zwischen Konsole und Verblechung auf variable und einfache Weise einstellen. Außerdem wird die Wärmeleistrecke dadurch verlängert und die Wärmeüberleitung zusätzlich erschwert.

Vorzugsweise ist die Konsole so dimensioniert, dass die Halterung eine Eigenlast der Außenkonstruktion bis zu 200 kg, vorzugsweise bis zu 300 kg, aufnehmen kann. Ausgehend vom Eigengewicht der üblicherweise verwendeten Außenkonstruktionen, lässt sich jeweils ein axialer Teilabschnitt der Außenkonstruktion mit einer besonders günstigen Anzahl, nämlich mit drei bis fünf, umfänglich gleichmäßig und auf einer Ebene angeordneten Halterungen tragen.

Vorzugsweise sind die auf der Außenwand aufgeschweißten Vorsprünge umfänglich gleichmäßig zum Einhängen und zur formschlüssigen Verankerung je einer Halterung vorgesehen. Dadurch wird die Verwendung teurer Schrauben und/oder Nieten in unmittelbarer Nähe der stark erhitzten Fallrohrwand entbehrlich.

Außerdem umfassen die Vorsprünge dann jeweils eine mit der Rohrwand verschweißte Basis und eine Halteplatte, wobei die Halteplatte nach oben über die Basis übersteht und mit der Rohrwand einen Spalt zur Aufnahme der Ankerplatte ausbildet. Eine solche Lagerung der Halterung an der Rohrwand ist besonders stabil und einfach herzustellen.

Vorzugsweise sind die Vorsprünge entlang des Fallrohrs in axialer Richtung in Abständen zueinander angeordnet, die nicht größer sind als 5 m, insbesondere nicht größer als 4,65 m. Bei diesem Abstand lässt sich die Eigenlast der axialen Teilabschnitte zwischen den Vorsprüngen von den erfindungsgemäßen Halterungen besonders sicher tragen. Anders gesagt, können die Konsolen mit so geringem Querschnitt ausgelegt werden, dass ausreichende Stabilität auch bei geringer Wärmeableitung gegeben ist.

Bevorzugte Ausführungsformen der Erfindung sind in der Zeichnung dargestellt. Es zeigen:
- Figur 1: eine schematische Schrägansicht einer erfindungsgemäßen Halterung;
- Figur 2a: eine schematische Seitenansicht eines Wandvorsprungs zur Verankerung der erfindungsgemäßen Halterung mit einer gestrichelt angedeuteten Ankerplatte;
- Figur 2b: eine radiale Ansicht des Wandvorsprungs aus Fig. 2a mit der Ankerplatte;
- Figur 2c: die Ansicht aus Fig. 2b mit verankerter Ankerplatte;
- Figur 3: eine schematische Seitenansicht einer Konsole einer alternativen Ausführungsform;
- Figur 4: eine schematischer Schnitt durch ein verkleidetes Fallrohr mit drei umfänglich gleichmäßig verteilten Halterungen für die Außenkonstruktion; und
- Figur 5: eine schematische Ansicht eines Fallrohrs mit mehreren axial verteilten Vorsprüngen.

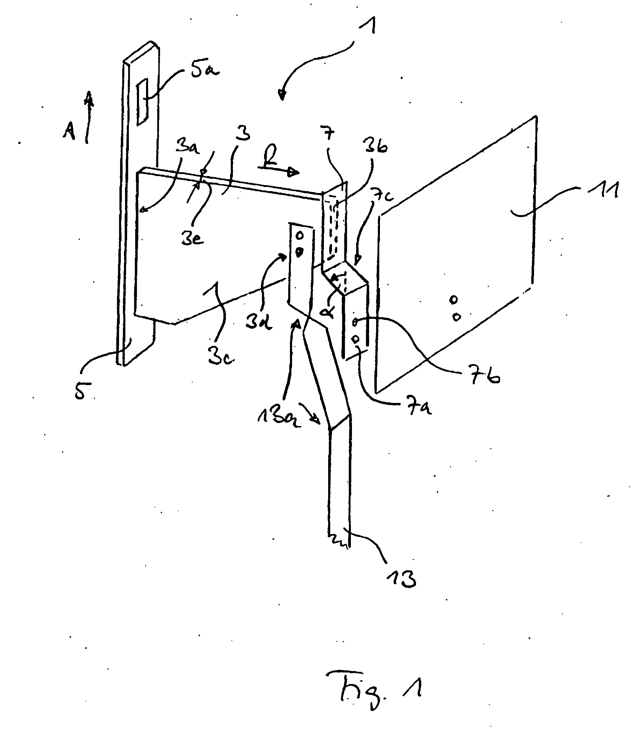

Wie der Figur 1 zu entnehmen ist, umfasst eine bevorzugte Ausführungsform der Halterung 1 eine plattenförmige Kragkonsole 3 mit einer ersten Stirnfläche 3a und einer zweiten Stirnfläche 3b, die kleiner ist als die erste Stirnfläche 3a. Die erste Stirnfläche 3a ist mit einer Ankerplatte 5 verschweißt, die zweite Stirnfläche 3b mit einem Aufhängeband 7. Die zugehörigen Schweißnähte sind der Übersichtlichkeit halber nicht gezeigt. Die Ankerplatte 5 und das Aufhängeband 7, insbesondere dessen Montage- bzw. Auflagefläche 7a, sind im Wesentlichen parallel zueinander angeordnet.

Im oberen Bereich der Ankerplatte 5 ist ein Langloch 5a zur deren Verankerung an einem Fallrohr 9 ausgebildet, an der Auflagefläche 7a des Aufhängebandes 7 Ausnehmungen 7b zur Befestigung einer äußeren Verkleidung bzw. Verblechung 11 mittels Schrauben und/oder Nieten (nicht gezeigt). An den Seitenflächen 3c der Kragkonsole 3 sind ferner Ausnehmungen 3d ausgebildet, an denen ein Ringkäfig 13 für eine zwischen dem Fallrohr 9 und der Verblechung 11 vorgesehene Isolationsschicht 15 mit Schrauben und/oder Nieten (nicht gezeigt) befestigt werden kann. Die Verblechung 11, die in Figur 1 nur ausschnittsweise gezeigt ist, der Ringkäfig 13 und die Isolationsschicht 15 bilden zusammen eine von mindestens zwei Halterungen 1 zu tragende Außenkonstruktion 16.

Im Folgenden sind orientierende Angaben wie "oben, außen" usw. zur besseren Verständlichkeit auf eine am Fallrohr 9 verankerte Halterung 1 und eine im Wesentlichen koaxiale Anordnung der Verkleidung bzw. Verblechung 11 bezüglich der Mittelachse 9a des Fallrohrs 9 bezogen.

Die Ankerplatte 5 bildet mit der Kragkonsole 3 in der Draufsicht einen rechten Winkel 12, so dass die Kragkonsole 3 bei an der Rohrwand 9b aufliegender bzw. verankerter Ankerplatte 5 im Wesentlichen radial bezüglich der Rohrachse 9a ausgerichtet ist.

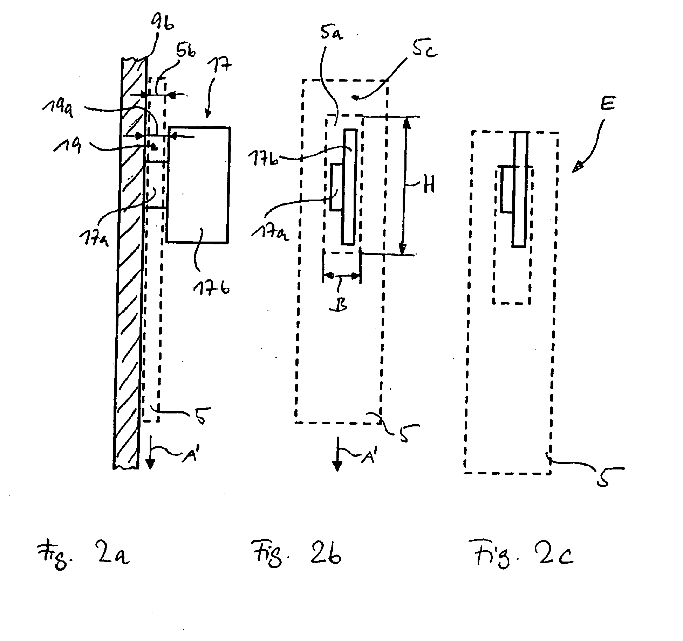

Wie die Figuren 2a bis 2c zeigen, ist zur Verankerung der Konsole 3 an der Rohrwand 9b ein Vorsprung 17 angeschweißt, wie beispielsweise ein Haken oder eine Nase, an dem die Ankerplatte 5 eingehängt werden kann. Entscheidend ist hierbei, dass die Ankerplatte 5 und der Vorsprung 17 so ausgebildet sind, dass die Kräfte zum Halten der Außenkonstruktion 16 durch den Formschluss zwischen der Ankerplatte 5 und dem Vorsprung 17 auf das Rohr 9 übertragen werden, so dass aus Gründen der Statik keine zusätzlichen Haltelemente wie Schrauben oder Nieten für die Verankerung der Konsole 3 benötigt werden sondern, falls überhaupt, lediglich zur Sicherung der Verankerung.

Vorzugsweise sind die Ankerplatte 5 und der Vorsprung 17 so ausgebildet, dass die Verankerung der Konsole 3 bereits durch die Eigenlast der Außenkonstruktion 16 stabilisiert bzw. gesichert wird. Anders gesagt, die Ankerplatte 5 wird allein durch den pro Halterung 1 zu tragenden Anteil F an der Eigenlast der Außenkonstruktion 16 in einer stabilen und die Traglast F auf das Fallrohr 9 übertragenden Einrastposition E am Vorsprung 17 verankert.

Dazu eignet sich beispielsweise die in Figur 2a bis 2c dargestellte hakenförmige Ausführung des Vorsprungs 17, der vorzugsweise aus dem gleichen Material besteht wie das Fallrohr 9. Der Vorsprung 17 besteht im Wesentlichen aus einer mit dem Rohr 9 verschweißten Basis 17a und einer Halteplatte 17b, wobei die Halteplatte 17b nach oben über die Basis 17a übersteht und mit der Rohrwand 9b einen Spalt 19 ausbildet.

Die Abmessungen des Langlochs 5a sind größer als die des Vorsprungs 17 in der radialen Ansicht der Figuren 2b und 2c, vorzugsweise um 1 bis 3 mm in der Breite B und um 4 bis 6 mm in der Höhe H, so dass die Ankerplatte 5 über den Vorsprung 17 bis an die Rohrwand 9b geschoben werden kann, wie in Fig. 2a angedeutet. Ferner ist das Spaltmaß 19a größer als die Dicke 5b der Ankerplatte 5, vorzugsweise um 1 bis 3 mm, so dass ein Abschnitt 5c oberhalb des Langlochs 5a in den Spalt 19 nach unten geschoben werden kann, wie in Fig. 2a und 2b durch den Pfeil A' angedeutet. Dadurch wird die Ankerplatte 5 am Rohr 9 eingehängt und in eine stabile Verankerungsposition E gebracht. Diese Spielpassung gewährleistet sowohl eine besonders einfache Montage als auch eine sichere Verankerung der Konsole 3 in der Position E; sie ist jedoch nicht auf die angegeben Maße beschränkt. Ebenso könnte der Vorsprung 17 anders geformt sein, solange eine mit der Ankerplatte 5 formschlüssige und statisch tragende Verbindung möglich ist.

Die Ankerplatte 5 ist nicht auf eine rechtwinklige, ebene Auflagefläche beschränkt, sondern könnte beispielsweise eine der Rohrwand 9b entsprechende Krümmung aufweisen.

Die Ankerplatte 5 könnte auch einstückig mit der Konsole 3 ausgeführt sein oder durch einen unmittelbaren Formschluss mit dieser verbunden sein. Eine Schweißverbindung, beispielsweise durch eine umlaufende Naht, bietet jedoch den Vorteil einer stabilen, einfach herzustellenden und Platz sparenden konstruktiven Verbindung. Dabei sei darauf hingewiesen, dass auch diese Schweißverbindung der Übersichtlichkeit nicht dargestellt ist, da deren fachmännische Ausführung allgemein bekannt ist.

Das Aufhängeband 7 ist aus einem wärmefesten Flachstahl, dessen Querschnitt vorzugsweise kleiner ist als der der Konsole 3, insbesondere der ihrer äußeren Stirnfläche 3b. Dadurch wird eine unerwünschte Wärmeableitung von der Konsole 3 zur Verblechung 11 reduziert. Ein bevorzugtes Aufhängeband 7 ist beispielsweise 40 mm breit und 4 mm stark.

Das Aufhängeband 7 ist vorzugsweise in einem Bereich 7c zwischen seiner Auflagefläche 7a und der äußeren Stirnfläche 3b der Konsole zweifach abgewinkelt, beispielsweise jeweils um einen Winkel α von 30°. Dadurch kann der Abstand 21 zwischen der äußeren Stirnfläche 3b der Konsole 3 und der Verblechung 11 angepasst werden. Außerdem wird durch die Abwinklung 7c die Länge der Wärmeleitstrecke von der Konsole 3 durch das Auf hängeband 7 bis zur Verblechung 11 verlängert und somit die unerwünschte Wärmeableitung zur Verblechung 11 weiter reduziert. Die Abwinklung 7c ist vorzugsweise so ausgebildet, dass die Auflagefläche 7a im Wesentlichen konzentrisch zum Fallrohr 9 ausgerichtet ist.

Die seitlichen Ausnehmungen 3d der Konsole 3 sind so angeordnet, dass der die Isolationsschicht 15 stabilisierende bzw. haltende Ringkäfig 13 direkt an der Konsole 3 angeschraubt und/oder mit dieser vernietet werden kann. Geeignete Ringkäfige 13 bestehen beispielsweise aus 40 mm breitem und 4 mm starkem wärmefesten Flachstahl und können von bekannter Bauart sein. Der Ringkäfig 13 ist daher nicht näher beschrieben. Außerdem könnte die Außenkonstruktion 16 alternativ auch ohne den Ringkäfig 13 ausgeführt werden. In Figur 1 ist allerdings angedeutet, dass ein oberer Abschnitt 13a des Ringkäfigs 13 zur Anpassung an die seitliche Konsolenwand 3c vorzugsweise um 90° verdrillt und bei Bedarf ebenfall abgewinkelt wird. Ebenso ist es vorteilhaft, die Ausnehmungen 3d in unmittelbarer Nachbarschaft der äußeren Stirnfläche 3b anzuordnen, also in einem äußeren Abschnitt der Konsole 3, in dem diese einen vergleichsweise kleinen Querschnitt aufweist, um die Wärmeableitung auch hier zu minimieren.

Die Ausführung der Konsole 3 als plattenförmige Kragkonsole mit im Wesentlichen radial ausgerichteten Seitenflächen 3c ermöglicht eine hohe Traglast F in axialer bzw. vertikaler Richtung A bei geringer Wärmeableitung in radialer Richtung R. Zusätzliche, isolierende Zwischenlagenplatten sind daher entbehrlich. Die Stärke 3e der Konsole 3 ist nicht größer als 10 mm, vorzugsweise nicht größer als 5 mm. An den Seitenwänden 3c können allerdings Versteifungsrippen usw. vorgesehen sein, so dass diese Werte als Mittelwerte zu interpretieren sind.

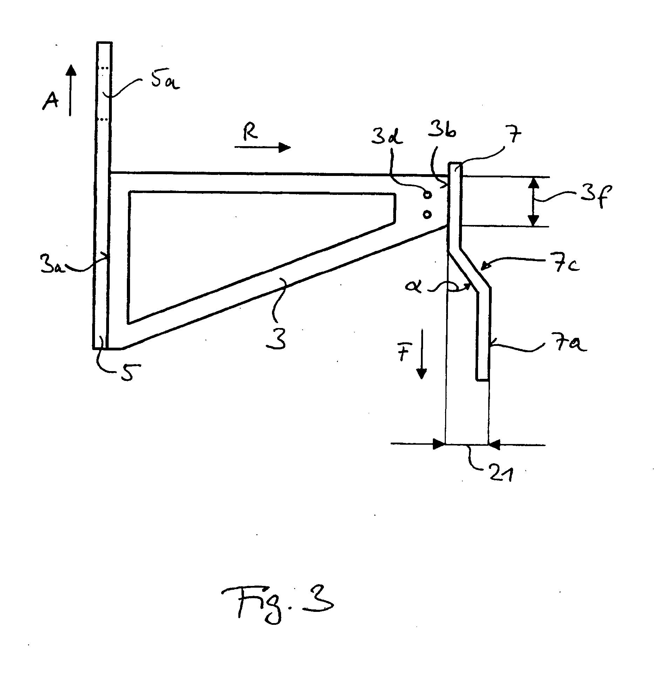

Wie in Figur 3 für eine alternative Ausführungsform angedeutet, kann die Konsole 3 auch zumindest abschnittsweise als Stabwerk ausgeführt sein. Auch dies begünstigt eine hohe statische Belastbarkeit in axialer Richtung A bei geringer radialer Wärmeableitung.

Die Konsole 3 ist bezüglich der Wärmeableitung so ausgelegt, dass an den Verbindungspunkten zum Aufhängeband 7 bzw. dem Ringkäfig 13 Temperaturen von 150°C nicht überschritten werden.

Die Materialauswahl für die Ankerplatten 5 und die Konsolen 3 aber auch für das Fallrohr 9 und den Vorsprung 17 richtet sich nach der Auslegungstemperatur des Fallrohrs 9. Verwendet werden wärmefeste Stähle: bei einer Rohrauslegungstemperatur von 400°C bzw. 620°C beispielsweise für das Fallrohr 9 und den Vorsprung 17 vorzugsweise 16Mo3, 13CrMo4-5 oder 10CrMo9-10 bzw. X10CrMoVNb9-1 oder X10CrWMoVNb9-2, sowie für die Konsole 3, die Ankerplatte 5 und das Aufhängeblech 7 vorzugsweise 16Mo3 bzw. X6CrNiTi18-10 (Material 1.4541). Dabei ist die Verankerung der Konsole 3 je nach Rohrauslegungstemperatur für eine Temperatur von 300 bis 350°C bzw. 500 bis 550°C am Übergang der Rohrwand 9b zur Ankerplatte 5 ausgelegt.

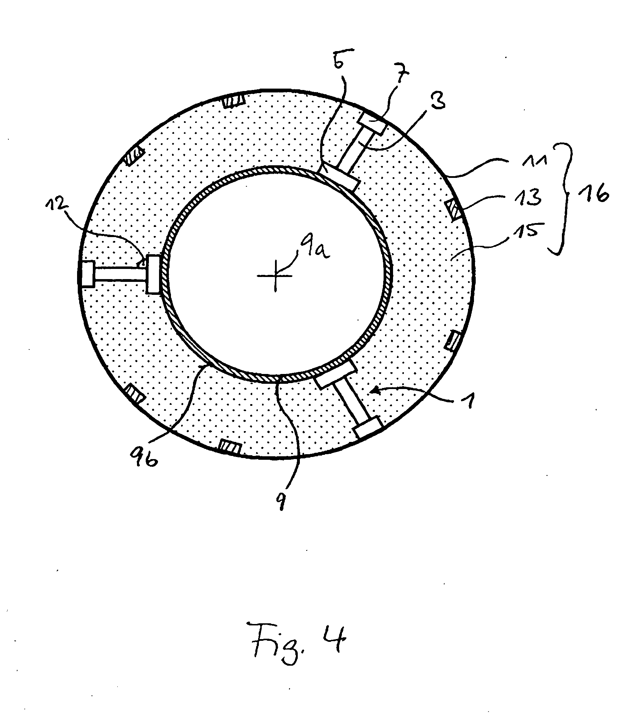

Figur 4 zeigt grob schematisiert ein Fallrohr 9, das mit einer Außenkonstruktion 16 bestehend aus einer umlaufenden Verblechung 11, einem Ringkäfig 13 und einer Isolationsschicht 15 verkleidet ist. Zum Halten eines axialen Teilabschnitts 16a der Außenkonstruktion 16 sind jeweils drei umfänglich gleichmäßig verteilte Halterungen 1 vorgesehen. Benötigt werden mindestens zwei Halterungen 1 pro Abschnitt 16a; für die Statik vorteilhaft ist jedoch eine größere, insbesondere ungerade Anzahl der Halterungen 1. Bei einer solchen umfänglichen Verteilung kann die Dicke 3e der Kragkonsolen 3 nicht nur in thermischer sondern auch in statischer Hinsicht minimiert werden. Vorzugsweise ist die Anzahl der Halterungen 1 pro Teilabschnitt 16a so an die Eigenlast der Außenkonstruktion 16 angepasst, dass die Traglast F pro Halterung 1 nicht größer ist als 300 kg, wovon vorzugsweise nicht mehr als 50 kg vom Aufhängeband 7 zu tragen sind.

Die Halterung 1 eignet sich insbesondere für heiße Fallrohre 9 mit einem Durchmesser von 0,2 bis 1 m. Der radiale Abstand zwischen dem Fallrohr 9 und der Verblechung 11 beträgt vorzugsweise 0,2 bis 0,4 m. Die Verblechung wird vorzugsweise aus 1 mm starken Glattblechen ausgeführt, die in axialer Richtung A beispielsweise um 10% überlappen und an den Überlappungsstellen mit außen liegenden Stahlbändern und Schließen in bekannter Weise verzurrt sind (nicht dargestellt). Die Isolationsschicht 15 besteht beispielsweise aus handelsüblicher Dämmwolle.

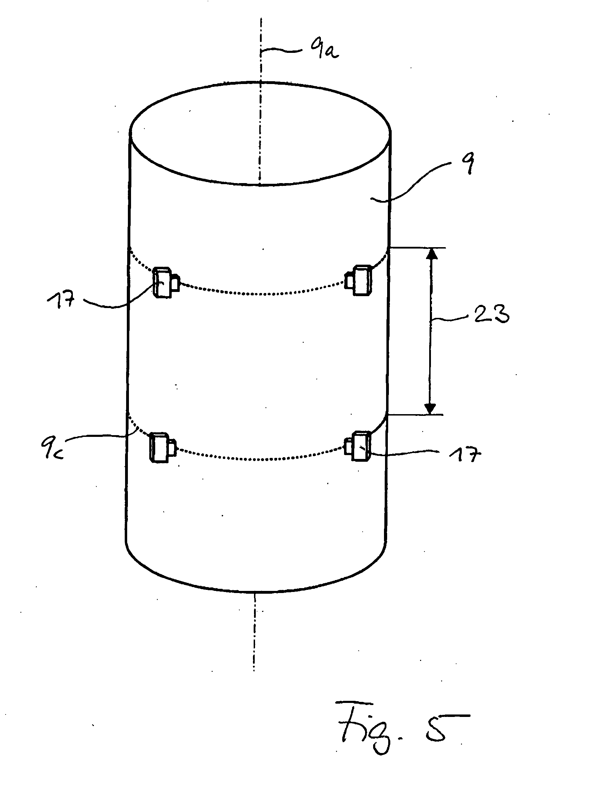

Die axiale Anordnung der Vorsprünge 17 ist in Figur 5 schematisch angedeutet. Der axiale Abstand 23 zwischen jeweils auf einer Ebene 9c des Fallrohrs 9 angeordneten Vorsprüngen 17 entspricht einem Teilabschnitt 16a der Außenkonstruktion 16 und beträgt maximal 5 m, vorzugsweise nicht mehr als 4,65 m. Diese Abstände 23 eignen sich besonders, um die Traglast F pro Halterung 1 zu optimieren. Es wären jedoch grundsätzlich auch andere Abstände 23 denkbar.

Die Halterung 1 erlaubt eine besonders günstige Verteilung der statischen und thermischen Lasten am Fallrohr 9. Die Merkmale der beschriebenen Ausführungsformen und Varianten können außerdem in vorteilhafter Weise miteinander kombiniert werden.

## Patentansprüche

1. Fallrohr (9) und Halterungen (1) für eine Außenkonstruktion (16) an dem Fallrohr (9), insbesondere für eine Verblechung (11) und/oder eine Isolationsschicht (15) an dem Fallrohr (9) für eine Dampfkraftanlage, wobei die Halterungen (1) Konsolen (3) zum Tragen der Außenkonstruktion (16) umfassen, und wobei an den Konsolen (3) Ankerplatten (5) mit einer Ausnehmung (5a) zum Einhängen und Verankern der Konsolen (3) an auf der Außenwand (9b) des Fallrohrs (9) aufgeschweißten Vorsprüngen (17) vorgesehen sind, wobei die Vorsprünge (17) jeweils eine mit der Außenwand (9b) verschweißte Basis (17a) und eine Halteplatte (17b) umfassen und die Halteplatte (17b) nach oben über die Basis (17a) übersteht und mit der Außenwand (9b) einen Spalt (19) zur Aufnahme jeweils einer Ankerplatte (5) ausbildet, und wobei die Ankerplatten (5) so ausgebildet sind, dass die Eigenlast (F) der Außenkonstruktion (16) durch einen Formschluss zwischen der derart am Fallrohr (9) verankerten Ankerplatte (5) und dem Fallrohr (9) getragen wird.

2. Fallrohr und Halterungen nach Anspruch 1, **dadurch gekennzeichnet, dass** die Konsolen (3) und die Ankerplatten (5) miteinander verschweißt sind.

3. Fallrohr und Halterungen nach Anspruch 1 oder 2, **dadurch gekennzeichnet, dass** die Ankerplatte (5) in der Draufsicht rechtwinklig (12) zur Konsole (3) ausgerichtet ist, um die Konsole (3) in einer im Wesentlichen radialen Ausrichtung am Fallrohr (9) zu verankern.

4. Fallrohr und Halterungen nach mindestens einem der vorigen Ansprüche, **dadurch gekennzeichnet, dass** die Konsole (3) eine plattenförmige Kragkonsole aus einem warmfesten Stahl ist, deren Dicke (3e) im Mittel höchstens 10 mm, insbesondere höchstens 5 mm beträgt.

5. Fallrohr und Halterungen nach mindestens einem der vorigen Ansprüche, **dadurch gekennzeichnet, dass** die Konsole (3) eine plattenförmige Kragkonsole ist, bei der das Verhältnis einer kleinsten Abmessung (3f) in einer Richtung (A) parallel zur Längsachse (9a) des Fallrohrs (9) zur Dicke (3e) der Konsole (3) mindestens 5, vorzugsweise mindestens 10 beträgt.

6. Fallrohr und Halterungen nach mindestens einem der vorigen Ansprüche, **dadurch gekennzeichnet, dass** die Konsole (3) eine Kragkonsole ist und zumindest abschnittsweise als Stabwerk ausgebildet ist.

7. Fallrohr und Halterungen nach mindestens einem der vorigen Ansprüche, **dadurch gekennzeichnet, dass** an einer der Ankerplatte (5) entgegen gesetzten Stirnfläche (3b) der Konsole (3) ein Aufhängeband (7) mit einer zur Ankerplatte (5) im Wesentlichen parallelen Auflagefläche (7a) für die Verblechung (11) vorgesehen ist.

8. Fallrohr und Halterungen nach Anspruch 7, **dadurch gekennzeichnet, dass** die Querschnittsfläche des Aufhängebands (7) kleiner ist als die Querschnittsfläche der Konsolenstirnfläche (3b).

9. Fallrohr und Halterungen nach Anspruch 7 oder 8, **dadurch gekennzeichnet, dass** an dem Aufhängeband (7) zwischen der Konsolenstirnfläche (3b) und der Auflagefläche (7a) ein abgewinkelter Abschnitt (7c) ausgebildet ist.

10. Fallrohr und Halterungen nach mindestens einem der vorigen Ansprüche, **dadurch gekennzeichnet, dass** die Konsole (3) so dimensioniert ist, dass die Halterung (1) eine Eigenlast (F) der Außenkonstruktion (16) bis zu 200 kg, vorzugsweise bis zu 300 kg, aufnehmen kann.

11. Fallrohr und Halterungen nach mindestens einem der vorigen Ansprüche, **dadurch gekennzeichnet, dass** die Vorsprünge (17) entlang des Fallrohrs (9) in axialer Richtung (A) in Abständen (23) zueinander angeordnet sind, die nicht größer sind als 5 m, insbesondere nicht größer als 4,65 m.

## Claims

1. Downpipe (9) and holders (1) for an external construction (16) on the downpipe (9), in particular for a flashing (11) and/or an insulation layer (15) on the downpipe (9) for a steam power plant, wherein the holders (1) comprise brackets (3) for supporting the external construction (16), and wherein anchor plates (5) are provided on the brackets (3), said plates comprising a recess (5a) for hanging and anchoring the brackets (3) on projections (17) welded onto the external wall (9b) of the downpipe (9), wherein the projections (17) each comprise a base (17a) welded to the external wall (9b) and a retaining plate (17b), and the retaining plate (17b) protrudes upwards beyond the base (17a) and forms, together with the external wall (9b), a gap (19) for receiving one anchor plate (5) in each case, and wherein the anchor plates (5) are formed such that the dead load (F) of the external construction (16) is supported by means of an interlocking connection between the anchor plate (5) anchored on the downpipe (9) in this way and the downpipe (9).

2. Downpipe and holders according to claim 1, **characterised in that** the brackets (3) and the anchor plates (5) are welded together.

3. Downpipe and holders according to either claim 1 or claim 2, **characterised in that** the anchor plate (5) is oriented at right angles (12) to the bracket (3) in plan view in order to anchor the bracket (3) in a substantially radial orientation on the downpipe (9).

4. Downpipe and holders according to at least one of the preceding claims, **characterised in that** the bracket (3) is a plate-shaped cantilever bracket made of a high-temperature steel which has an average thickness (3e) of at most 10 mm, in particular at most 5 mm.

5. Downpipe and holders according to at least one of the preceding claims, **characterised in that** the bracket (3) is a plate-shaped cantilever bracket, in which the ratio of the smallest dimension (3f) in a direction (A) parallel to the longitudinal axis (9a) of the downpipe (9) to the thickness (3e) of the bracket (3) is at least 5, preferably at least 10.

6. Downpipe and holders according to at least one of the preceding claims, **characterised in that** the bracket (3) is a cantilever bracket and is formed at least in portions as a bar-type supporting framework.

7. Downpipe and holders according to at least one of the preceding claims, **characterised in that** a suspension strip (7) comprising a bearing surface (7a) for the flashing (11) which is substantially parallel to the anchor plate (5) is provided on an end face (3b) of the bracket (3) opposite the anchor plate (5).

8. Downpipe and holders according to claim 7, **characterised in that** the cross-sectional area of the suspension strip (7) is smaller than the cross sectional area of the end face (3b) of the bracket.

9. Downpipe and holders according to either claim 7 or claim 8, **characterised in that** an angled portion (7c) is formed on the suspension strip (7) between the end face (3b) of the bracket and the bearing surface (7a).

10. Downpipe and holders according to at least one of the preceding claims, **characterised in that** the bracket (3) is dimensioned such that the holder (1) can support a dead load (F) of the external construction (16) of up to 200 kg, preferably up to 300 kg.

11. Downpipe and holders according to at least one of the preceding claims, **characterised in that** the projections (17) are arranged at intervals (23) from one another in the axial direction (A) along the downpipe (9), which intervals are no greater than 5 m, in particular no greater than 4.65 m.

## Revendications

1. Tuyau de descente (9) et supports (1) pour une construction externe (16) sur le tuyau de descente (9), en particulier pour un solin (11) et/ou une couche d'isolation (15) sur le tuyau de descente (9) pour une centrale à vapeur, dans lequel les supports (1) comportent des consoles (3) destinées à porter la construction externe (16), et dans lequel des plaques d'ancrage (5) avec une encoche (5a) pour suspendre et ancrer les consoles (3) sur des projections (17) soudées sur la paroi externe (9b) du tuyau de descente (9) sont pourvues sur les consoles (3), dans lequel les projections (17) comportent chacune une base (17a) soudée à la paroi externe (9b) et une plaque de support (17b), et la plaque de support (17b) se projette vers le haut au-delà de la base (17a) et constitue avec la paroi externe (9b) un intervalle (19) pour recevoir une plaque d'ancrage (5) respective, et dans lequel les plaques d'ancrage (5) sont constituées de telle sorte que la charge propre (F) de la construction externe (16) est supportée par un engagement mécanique entre la plaque d'ancrage (5) ainsi ancrée au tuyau de descente (9) et le tuyau de descente (9).

2. Tuyau de descente et supports selon la revendication 1, **caractérisé en ce que** les consoles (3) et les plaques d'ancrage (5) sont soudées entre elles.

3. Tuyau de descente et supports selon la revendication 1 ou 2, **caractérisé en ce que** la plaque d'ancrage (5) est orientée perpendiculairement (12) à la console (3) en vue en élévation pour ancrer la console (3) au tuyau de descente (9) en direction essentiellement radiale.

4. Tuyau de descente et supports selon au moins l'une des revendications précédentes, **caractérisé en ce que** la console (3) est une console de support en forme de plaque en acier résistant aux hautes températures, dont l'épaisseur (3e) en moyenne est d'au plus 10 mm, et en particulier d'au plus 5 mm.

5. Tuyau de descente et supports selon au moins l'une des revendications précédentes, **caractérisé en ce que** la console (3) est une console de support en forme de plaque dont le rapport de la plus petite dimension (3f) dans une direction (A) parallèle à l'axe longitudinal (9a) du tuyau de descente (9) par l'épaisseur (3e) de la console (3) est d'au moins 5, et préférablement d'au moins 10.

6. Tuyau de descente et supports selon au moins l'une des revendications précédentes, **caractérisé en ce que** la console (3) est une console de support et est constituée comme un système de barres au moins en coupe.

7. Tuyau de descente et supports selon au moins l'une des revendications précédentes, **caractérisé en ce qu'**une bande de suspension (7) avec une surface de contact (7a) essentiellement parallèle à la plaque d'ancrage (5) est pourvue pour le solin (11) sur une face frontale (3b) de la console (3) opposée à la plaque d'ancrage (5).

8. Tuyau de descente et supports selon la revendication 7, **caractérisé en ce que** la surface de la section transversale de la bande de suspension (7) est inférieure à la surface de la section transversale de la face frontale de la console (3b).

9. Tuyau de descente et supports selon la revendication 7 ou 8, **caractérisé en ce qu'**une section coudée (7c) est constituée sur la bande de suspension (7) entre la face frontale de la console (3b) et la surface de contact (7a).

10. Tuyau de descente et supports selon au moins l'une des revendications précédentes, **caractérisé en ce que** la console (3) est dimensionnée de telle sorte que le support (1) peut supporter une charge propre (F) de la construction externe (16) allant jusqu'à 200 kg, et préférablement jusqu'à 300 kg.

11. Tuyau de descente et supports selon au moins l'une des revendications précédentes, **caractérisé en ce que** les projections (17) sont agencées le long du tuyau de descente (9) en direction axiale (A) avec des espacements (23) inférieurs ou égaux à 5 m, et en particulier inférieurs ou égaux à 4,65 m.
